(19) Europäisches Patentamt
European Patent Office
Office européen des brevets

(11) **EP 4 488 513 A1**

(12) **EUROPEAN PATENT APPLICATION**
published in accordance with Art. 153(4) EPC

(43) Date of publication:
**08.01.2025  Bulletin 2025/02**

(21) Application number: **23818217.4**

(22) Date of filing: **10.11.2023**

(51) International Patent Classification (IPC):
**F03D 17/00** (2016.01)

(52) Cooperative Patent Classification (CPC):
Y02E 10/72

(86) International application number:
**PCT/CN2023/131025**

(87) International publication number:
**WO 2024/234587 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.05.2023  CN 202310558910**

(71) Applicant: **China Three Gorges Renewables
(Group) Co., Ltd.
Beijing 101199 (CN)**

(72) Inventors:
• **WANG, Qian
  Beijing 101199 (CN)**
• **LV, Pengyuan
  Beijing 101199 (CN)**
• **LAN, Jinjiang
  Beijing 101199 (CN)**
• **GAO, Dongxing
  Beijing 101199 (CN)**
• **LIANG, Xin
  Beijing 101199 (CN)**
• **QIU, Wenju
  Beijing 101199 (CN)**
• **ZHANG, Pei
  Beijing 101199 (CN)**
• **ZHANG, Dawei
  Beijing 101199 (CN)**

(74) Representative: **Pfenning, Meinig & Partner mbB
Patent- und Rechtsanwälte
Joachimsthaler Straße 10-12
10719 Berlin (DE)**

(54) **WIND TURBINE DAMAGE ALARM METHOD AND APPARATUS, SERVER AND STORAGE MEDIUM**

(57)  The present application provides a damage alarm method and apparatus for a wind power generator set, a server and a storage medium, and relates to the field of wind power generation technologies. The server acquires a key parameter sent by the wind power generator set, where the key parameter is a key parameter of a target component of the wind power generator set collected by the wind power generator set in an emergency collection mode; the server determines whether there is a risk of damage to the wind power generator set according to the key parameter of the target component; and the server sends, to a terminal device, an alarm prompt indicating that there is a damage risk, when determining that there is a risk of damage to the wind power generator set. The key parameter includes at least one of the following: a vibration parameter, an inclination parameter and a load parameter. In this way, there is no need for inspection personnel to check one by one whether each component of the wind power generator set is damaged by a typhoon, which saves a lot of time and has a high efficiency, and there is also no need to shut down a power generation function of the wind power generator set, which greatly reduces a power generation loss.

**EP 4 488 513 A1**

**(Cont. next page)**

S201

Acquire, by a server, a key parameter sent by a wind power generator set

S202

Determine, by the server, whether there is a risk of damage to the wind power generator set according to the key parameter of a target component

Yes

S203

Send, by the server, an alarm prompt indicating that there is a damage risk, to a terminal device

FIG. 2

## Description

The present application claims priority to Chinese Patent Application No. 202310558910.0, entitled "Damage Alarm Method and Apparatus for Wind Power Generator Set, Server and Storage Medium" and filed with the China National Intellectual Property Administration on May 17, 2023, the disclosure of which is hereby incorporated by reference in its entirety.

## TECHNICAL FIELD

The present application relates to the field of wind power generation technologies and, in particular, to a damage alarm method and apparatus for a wind power generator set, a server and a storage medium.

## BACKGROUND

A wind power generator set is a power device that converts a wind energy into a mechanical work, and the mechanical work drives a rotor to rotate, and finally outputs an alternating current. At present, the wind power generator set may be set on a sea by piling, so that the wind power generator set may perform an offshore wind power generation. The offshore wind power generation has unique advantages such as a stable wind energy resource and no occupation of land. However, the offshore wind power generator set is susceptible to typhoon erosion and damage.

At present, when the wind power generator set needs to continue generating the power after a typhoon, inspection personnel need to go out to sea to reach a location of the wind power generator set and turn off a power generation function of the wind power generator set. Furthermore, the inspection personnel check one by one whether each component of the wind power generator set is damaged by the typhoon. The above process needs to take a lot of time and is inefficient. In addition, since the power generation function of the wind power generator set is turned off during a checking period, a huge loss of power generation will be caused.

## SUMMARY

The present application provides a damage alarm method and apparatus for a wind power generator set, a server and a storage medium, to solve the problem in the prior art that inspection personnel need to check one by one whether each component of the wind power generator set is damaged by a typhoon, which needs to take a lot of time and has a low efficiency.

In a first aspect, the present application provides a damage alarm method for a wind power generator set, including: acquiring, by a server, a key parameter sent by the wind power generator set, where the key parameter is a key parameter of a target component of the wind power generator set collected by the wind power generator set in an emergency collection mode; determining, by the server, whether there is a risk of damage to the wind power generator set according to the key parameter of the target component; sending, by the server, an alarm prompt indicating that there is a damage risk, to a terminal device, when determining that there is a risk of damage to the wind power generator set. The key parameter includes at least one of the following: a vibration parameter, an inclination parameter and a load parameter.

In a possible implementation, when the target component includes a blade of the wind power generator set, and the vibration parameter is a flapwise vibration amplitude, a edgewise vibration amplitude, a coupling vibration amplitude and a natural frequency of the blade, the determining, by the server, whether there is a risk of damage to the wind power generator set according to the key parameter of the target component includes: determining, by the server, that there is a risk of damage to the blade of the wind power generator set, when any one of the flapwise vibration amplitude, the edgewise vibration amplitude, and the coupling vibration amplitude of the blade is greater than a preset first amplitude threshold, or a reduction of the natural frequency of the blade exceeds a preset frequency threshold.

When any one of the flapwise vibration amplitude, the edgewise vibration amplitude, and the coupling vibration amplitude of the blade is greater than the preset first amplitude threshold, or the reduction of the natural frequency of the blade exceeds the preset frequency threshold, it means that when the wind power generator set in the emergency collection mode, the typhoon has caused a damage to the blade of the wind power generator set. In this way, it is determined that there is a risk of damage to the blade of the wind power generator set, and a reliability of such determination is high.

In a possible implementation, when the target component includes the blade and/or a tower of the wind power generator set, and the load parameter is a load parameter at a root of the blade, and/or a load parameter at a middle part of the blade, and/or a load parameter at a bottom of the tower, the determining, by the server, whether there is a risk of damage to the wind power generator set according to the key parameter of the target component: determining that there is a risk of damage to the blade of the wind power generator set, when the server detects that the load parameter at the root of the blade is greater than a preset first load parameter threshold.

When it is detected that the load parameter at the root of the blade is greater than the preset first load parameter threshold, it means that when the wind power generator set is in the emergency collection mode, the typhoon has caused damage to the blade of the wind power generator set. In this way, it is determined that there is a risk of damage to the blade of the wind power generator set, and the reliability of such determination is high.

And/or, the server determines that there is a risk of damage to the blade of the wind power generator set, when detecting that the load parameter at the middle part of the blade is greater than a preset second load parameter threshold; and/or, the server determines that there is a risk of damage to the tower of the wind power generator set, when the load parameter at the bottom of the tower is greater than a preset third load parameter threshold.

When it is detected that the load parameter at the middle part of the blade is greater than the preset second load parameter threshold, it means that when the wind power generator set is in the emergency collection mode, the typhoon has caused the damage to the blade of the wind power generator set. In this way, it is determined that there is a risk of damage to the blade of the wind power generator set, and the reliability of such determination is high. Or, when the load parameter at the bottom of the tower is greater than the preset third load parameter threshold, when the wind power generator set is in the emergency collection mode, the typhoon has caused damage to the tower of the wind power generator set. In this way, it is determined that there is a risk of damage to the tower of the wind power generator set, and the reliability of such determination is high.

In a possible implementation, when the target component includes a blade of the wind power generator set, the key parameter includes a load parameter of the blade, and the determining, by the server, whether there is a risk of damage to the wind power generator set according to the key parameter of the target component includes:

analyzing, by the server and according to a rain flow counting statistical algorithm, a variation spectrum of the load parameter of the blade of the wind power generator set during the emergency collection mode;
determining, by the server, a number of cycles $n_i$ of each stress in K stresses that the wind power generator set is subjected to, and a number of cycles $N_i$ of each stress that causes the blade to reach a fatigue limit when the blade in the emergency collection mode, according to the variation spectrum of the load parameter;
determining, by the server, a damage degree $D_{blade}$ of the blade, according to the number of cycles $n_i$ of each stress in K stresses that the blade is subjected to, the number of cycles $N_i$ of each stress that causes the blade to reach the fatigue limit during the emergency collection mode, and a formula:

$$D_{blade} = \sum_{i}^{K} \frac{n_i}{N_i}(i = 1,2..k,)$$

,

determining, by the server, that there is a risk of damage to the blade of the wind power generator set, when the damage degree is greater than a preset first damage degree threshold.

It can be understood that the reliability of the damage degree of the blade determined by the above formula is high, and therefore, the reliability of determining that there is a risk of damage to the blade of the wind power generator set when the damage degree is greater than the preset first damage degree threshold is also high.

In a possible implementation, when the target component includes a nacelle of the wind power generator set, and the vibration parameter is a vibration amplitude and a natural frequency of the nacelle, the determining, by the server, whether there is a risk of damage to the wind power generator set according to the key parameter of the target component includes: determining, by the server, that there is a risk of damage to the nacelle of the wind power generator set, when the vibration amplitude of the nacelle is greater than a preset second amplitude threshold, or a reduction of the natural frequency of the nacelle exceeds a preset frequency threshold.

When the vibration amplitude of the nacelle is greater than the preset second amplitude threshold, or the reduction of the natural frequency of the nacelle exceeds the preset frequency threshold, it means that when the wind power generator set is in the emergency collection mode, the typhoon has caused a damage to the nacelle of the wind power generator set. In this way, it is determined that there is a risk of damage to the nacelle of the wind power generator set, and the reliability of such determination is high.

In a possible implementation, when the target component includes a nacelle and/or a tower of the wind power generator set, the determining, by the server, whether there is a risk of damage to the wind power generator set according to the key parameter of the target component includes: determining, by the server, that there is a risk of damage to the nacelle or the tower of the wind power generator set, when an inclination parameter of the nacelle of the wind power generator set or an inclination parameter at a bottom of the tower of the wind power generator set is greater than a preset inclination parameter threshold.

When the inclination parameter of the nacelle of the wind power generator set or the inclination parameter at the bottom of the tower of the wind power generator set is greater than the preset inclination parameter threshold, it means that when the wind power generator set is in the emergency collection mode, the typhoon has caused the damage to the nacelle of the wind power generator set. In this way, it is determined that there is a risk of damage to the nacelle of the wind power generator set, and the reliability of such determination is high.

In a possible implementation, the target component includes a tower of the wind power generator set, the key parameter includes a load parameter of the tower, and the determining, by the server, whether there is a risk of damage to the wind power generator set according to the key parameter of the target component includes:

analyzing, by the server and according to a rain flow counting statistical algorithm, a variation spectrum of the load parameter of the tower of the wind power generator set during the emergency collection mode;

determining, by the server, a number of cycles $n_i$ of each stress in K stresses that the tower of the wind power generator set is subjected to, and a number of cycles $N_i$ of each stress that causes the blade to reach a fatigue limit during the emergency collection mode, according to the variation spectrum of the load parameter;

determining, by the server, a damage degree $D_{blade}$ of the tower, according to the number of cycles $n_i$ of each stress in K stresses that the tower is subjected to, the number of cycles $N_i$ of each stress that causes the tower to reach the fatigue limit during the emergency collection mode, and a formula:

$$D_{blade} = \sum_i^K \frac{n_i}{N_i} (i = 1, 2..k,) \quad ,$$

determining, by the server, that there is a risk of damage to the tower of the wind power generator set, when the damage degree is greater than a preset second damage degree threshold.

It can be understood that the reliability of the damage degree of the blade determined by the above formula is high, and therefore, the reliability of determining that there is a risk of damage to the blade of the wind power generator set when the damage degree is greater than the preset first damage degree threshold is also high.

In a possible implementation, a premise for the wind power generator set in the emergency collection mode includes:

a main controller of the wind power generator set enters a typhoon mode;

or, the main controller of the wind power generator set determines that a network disconnection occurs;

or, the main controller of the wind power generator set determines that a power outage occurs;

or, the main controller of the wind power generator set determines that a wind speed is greater than a preset threshold.

In a second aspect, the present application further provides a damage alarm apparatus for a wind power generator set, including: a parameter acquiring unit, configured to acquire a key parameter sent by the wind power generator set, where the key parameter is a key parameter of a target component of the wind power generator set collected by the wind power generator set in an emergency collection mode; a risk determining unit, configured to determine whether there is a risk of damage to the wind power generator set according to the key parameter of the target component; an alarm prompting unit, configured to send, to a terminal device, an alarm prompt indicating that there is a damage risk, when it is determined that there is a risk of damage to the wind power generator set. The key parameter includes at least one of the following: a vibration parameter, an inclination parameter and a load parameter.

In a third aspect, the present application further provides a server, including a memory, a processor, and computer programs stored in the memory and runnable on the processor, when the processor executes the computer programs, the server is caused to execute the method provided by the first aspect of the present application.

In a fourth aspect, the present application further provides a computer readable storage medium having computer programs stored on, when the computer programs are executed by a processor, a computer is caused to execute the method provided by the first aspect of the present application.

The present application provides a method and apparatus for a wind power generator set, a server and a storage medium. Because a key parameter includes at least one of the following: a vibration parameter, an inclination parameter and a load parameter, in this way, the server may determine whether there is a risk of damage to the wind power generator set according to the key parameter of the target component in an emergency collection mode sent by the wind power generator set. When determining that there is a risk of damage to the wind power generator set, the server sends, to a terminal device, an alarm prompt indicating that there is a damage risk. In this way, there is no need for inspection personnel to check one by one whether each component of the wind power generator set is damaged by a typhoon, which saves a lot of time and has a high efficiency, and there is also no need to shut down a power generation function of the wind power generator set, which greatly reduces a power generation loss.

**BRIEF DESCRIPTION OF DRAWINGS**

In order to explain the embodiments of the present application or the technical solutions in the prior art more clearly, the drawings needed to be used in the description of the embodiments or the prior art will be introduced briefly in the following. Obviously, the drawings in the following description are some embodiments of the present application. For those skilled in the art, other drawings can be obtained from these drawings without paying creative labor.

FIG. 1 is a schematic structural diagram of a wind power generator set provided by an embodiment of the present application.

FIG. 2 is a flowchart 1 of a damage alarm method for a wind power generator set provided by an embodiment of the present application.

FIG. 3 is a flowchart 2 of a damage alarm method for a wind power generator set provided by an embodiment of the present application.

FIG. 4 is a flowchart 3 of a damage alarm method for a wind power generator set provided by an embodiment of the present application.

FIG. 5 is a flowchart 4 of a damage alarm method for a wind power generator set provided by an embodiment of the present application.

FIG. 6 is a flowchart 5 of a damage alarm method for a wind power generator set provided by an embodiment of the present application.

FIG. 7 is a flowchart 6 of a damage alarm method for a wind power generator set provided by an embodiment of the present application.

FIG. 8 is a flowchart 7 of a damage alarm method for a wind power generator set provided by an embodiment of the present application.

FIG. 9 is a functional module block diagram of a damage alarm apparatus for a wind power generator set provided by an embodiment of the present application.

## DESCRIPTION OF EMBODIMENTS

To make the purposes, technical solutions and advantages of embodiments of the present application more clearly, the technical solutions in the embodiments of the present application are clearly and comprehensively described in the following with reference to the accompanying drawings of the embodiments of the present application. Obviously, the described embodiments are part of embodiments of the present application, not all embodiments. Based on the embodiments of the present application, all other embodiments obtained by those skilled in the art without creative effort are all within the protection scope of the present application.

The terms "first", "second", "third", "fourth", and so on (if they exist) in the description and claims of the present application and the above drawings are used to distinguish similar objects and not necessarily to describe a specific order or sequence. It should be understood that data used in this way may be interchanged under appropriate circumstances such that the embodiments of the present application described herein may be implemented in sequences other than those illustrated or described herein. In addition, the terms "include" and "have" and any variations thereof are intended to cover non-exclusive inclusions, for example, a process, method, system, product, or device that contains a series of steps or units is not necessarily limited to those clearly listed steps or units, but may include other steps or units that are not clearly listed or inherent to the process, method, product, or device.

At present, when the wind power generator set needs to continue generating the power after the typhoon, inspection personnel need to go out to sea to reach a location of the wind power generator set and turn off a power generation function of the wind power generator set. Furthermore, the inspection personnel check one by one whether each component of the wind power generator set is damaged by the typhoon. The above process needs to take a lot of time and is inefficient. In addition, since the power generation function of the wind power generator set is turned off during a checking period, a huge loss of power generation will be caused.

Based on the above technical problems, the inventive concept of the present application is that a server may determine whether there is a risk of damage to the wind power generator set according to a key parameter of a target component in an emergency collection mode sent by the wind power generator set. When determining that there is a risk of damage to the wind power generator set, the server sends, to a terminal device, an alarm prompt indicating that there is a damage risk.

In this way, a damage alarm method for the wind power generator set provided by the present application does not need inspection personnel to check one by one whether the each component of the wind power generator set is damaged by a typhoon, which saves a lot of time and has a high efficiency, and does not need to shut down a power generation function of the wind power generator set either, which greatly reduces a power generation loss.

The technical solution of the present application and how the technical solution of the present application solves the above technical problem will be illustrated in detail with specific embodiments in the following. The following specific embodiments may be combined with each other, and the same or similar concepts or processes may not be repeated in some embodiments. Embodiments of the present application will be described below with reference to the accompanying drawings.

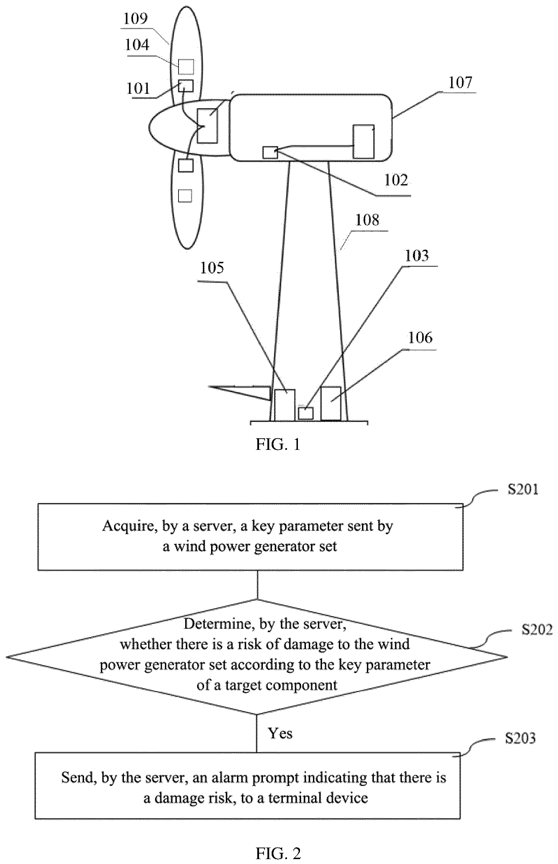

Embodiments of the present application provide a damage alarm method for a wind power generator set, which is applied to a server. The server is communicatively connected with multiple wind power generator sets. As shown in FIG. 1, the wind power generator set includes a blade 109, a nacelle 107, and a tower 108, where the blade 109 is connected to one side of the nacelle 107, the tower 108 is connected to a bottom of the nacelle 107, and the tower 108 is provided with a generator inside. The blade 109 rotates when the blade 109 is subjected to a wind, and drives the rotor of the generator to rotate to generate power, and thus, a wind energy is converted into an electrical energy. The wind power generator set is provided with a key parameter collecting module, a control cabinet 106 and a wireless communication module, where the control cabinet 106 is communicatively connected with the server through the wireless communication module, and the key parameter collecting module, the control cabinet 106 and the wireless communication module are electrically connected in sequence. The control cabinet 106 is provided with a main controller therein.

Specifically, also as shown in FIG. 1, the key parameter collecting module includes a first vibration parameter collecting module 101 set at the blade 109, a second vibration parameter collecting module 102 set at the nacelle 107, an inclination parameter collecting module 103 set at the tower 108, a first load parameter collecting module 104 set at the blade 109, and a second load parameter collecting module 105 set at the tower 108. The first vibration parameter collecting module 101 set at the blade 109 is used to collect a vibration parameter of the blade 109; the second vibration parameter collecting module 102 set at the nacelle 107 is used to collect a vibration parameter of the nacelle 107, the inclination parameter collecting module 103 set at the tower 108 is used to collect an inclination parameter of the tower 108. A sampling frequency of the vibration parameter, inclination parameter, and load parameter collected above is 50 Hz.

A collecting manner of the above vibration parameter may be: when determining that the wind power generator set is in an emergency collection mode, the control cabinet 106 starts an emergency power supply to supply power, and notifies the second load parameter collecting module 105 set at the tower 108 to collect the load parameter (where the load parameter may be an average value of a sub-load parameter collected on a front side of the tower 108, a sub-load parameter collected on a rear side of the tower 108, a sub-load parameter collected on a left side of the tower 108, and a sub-load parameter collected on a right side of the tower 108) of the tower 108, and notifies the inclination parameter collecting module 103 set at the tower 108 to collect the inclination parameter (the inclination parameter may be an average value of a sub-inclination parameter collected on the front side of the tower 108 and a sub-inclination parameter collected on the rear side of the tower 108, or the inclination parameter may also be an average value of a sub-inclination parameter collected on the left side of the tower 108 and a sub-inclination parameter collected on the right side of the tower 108). In addition, the second load parameter collecting module 105 or the inclination parameter collecting module 103 notifies the second vibration parameter collecting module 102 provided at the nacelle 107 to collect the vibration parameter of the nacelle 107. Furthermore, the second vibration parameter collecting module 102 of the nacelle 107 notifies the first vibration parameter collecting module 101 provided at the blade 109 to collect the vibration parameter of the blade 109, and notifies the first load parameter collecting module 104 provided at the blade 109 to collect the load parameter of the blade 109.

FIG. 2 is a damage alarm method for a wind power generator set provided in an embodiment of the present application. As shown in FIG. 2, the embodiment of the present application provides the damage alarm method for the wind power generator set, including the following steps.

S201, acquire, by a server, a key parameter sent by the wind power generator set.

Specifically, a control cabinet 106 of the wind power generator set may send the key parameter to the wind power generator set through a wireless communication module, thereby enabling the server to acquire the key parameter sent by the wind power generator set.

The key parameter is a key parameter of a target component of the wind power generator set collected by the wind power generator set in an emergency collection mode. For example, the key parameter may be, but not limited to, a vibration parameter of the blade 109, a vibration parameter of the nacelle 107, and an inclination parameter of the tower 108.

It should be noted that the premise for the wind power generator set in the emergency collection mode includes:

> the main controller of the wind power generator set enters a typhoon mode (for example, a user remotely triggers the main controller to enter the typhoon mode);
> or, the main controller of the wind power generator set determines that a network disconnection occurs;
> or, the main controller of the wind power generator set determines that a power outage occurs (at this time, the wind power generator set is supplied with power by an emergency power supply device);
> or, the main controller of the wind power generator set determines that a wind speed is greater than a preset threshold (for example, the main controller determines that a wind speed sensor sends greater than 27m/s).

It can be understood that, when the main controller of the wind power generator set enters the typhoon mode, determines that the power outage occurs, determines that the network disconnection occurs, or determines that the wind speed is greater than the preset threshold (such as 27m/s), it means that the wind power generator set may be damaged by the wind of the typhoon, and at this time, the key parameter sent by the wind power generator set are acquired.

S202, determine, by the server, whether there is a risk of damage to the wind power generator set according to the key parameter of the target component, and if so, S203 is executed.

S203, send, by the server, an alarm prompt indicating that there is a damage risk, to a terminal device.

In this way, maintenance personnel may view the damage alarm prompt that there is a risk of damage to the wind power generator set on the terminal device, and then a repair is performed on the wind power generator set.

To sum up, embodiments of the present application provide a damage alarm method for a wind power generator set generator. Because a key parameter includes at least one of the following: a vibration parameter, an inclination parameter and a load parameter, in this way, the server may determine whether there is a risk of damage to the wind power generator set according to the key parameter of the target component in an emergency collection mode sent by the wind power generator set. When determining that there is a risk of damage to the wind power generator set, the server sends, to a terminal device, an alarm prompt indicating that there is a damage risk. In this way, there is no need for inspection personnel to check one by one whether each component of the wind power generator set is damaged by a typhoon, which saves a lot of time and has a high efficiency, and there is also no need to shut down a power generation function of the wind power generator set, which greatly reduces a power generation loss.

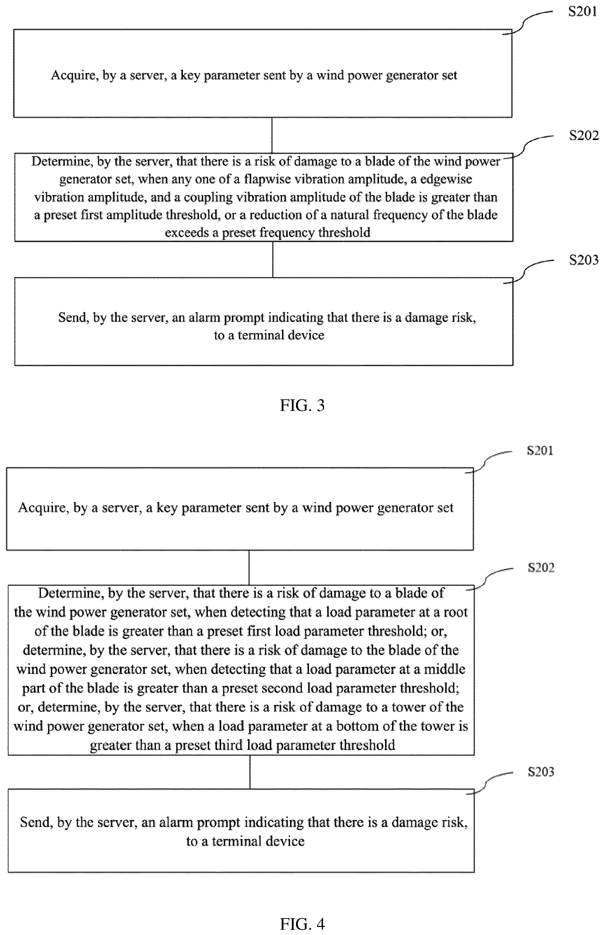

Exemplarily, when the target component includes the blade 109 of the wind power generator set generator, and the vibration parameter is a flapwise vibration amplitude, a edgewise vibration amplitude, a coupling vibration amplitude and a natural frequency of the blade 109, FIG. 3 is another damage alarm method for the wind power generator set provided by an embodiment of the present application. As shown in FIG. 3, the above 202 may specifically be implemented as:
determine, by the server, that there is a risk of damage to the blade 109 of the wind power generator set, when any one of the flapwise vibration amplitude, the edgewise vibration amplitude, and the coupling vibration amplitude of the blade 109 is greater than a preset first amplitude threshold, or a reduction of the natural frequency of the blade 109 exceeds a preset frequency threshold.

When any one of the flapwise vibration amplitude, the edgewise vibration amplitude, and the coupling vibration amplitude of the blade 109 is greater than the preset first amplitude threshold, or the reduction of the natural frequency of the blade 109 exceeds the preset frequency threshold, it means that when the wind power generator set is in the emergency collection mode, the typhoon has caused damage to the blade 109 of the wind power generator set. In this way, it is determined that there is a risk of damage to the blade 109 of the wind power generator set, and a reliability of such determination is high.

Exemplarily, when the target component includes the blade 109 and/or the tower 108 of the wind power generator set, and the load parameter is a load parameter at a root of the blade 109, and/or a load parameter at a middle part of the blade 109, and/or a load parameter at a bottom of the tower 108, FIG. 4 is another damage alarm method for a wind power generator set provided by an embodiment of the present application. As shown in FIG. 4, S202 may specifically be implemented as:
determine, by the server, that there is a risk of damage to the blade 109 of the wind power generator set, when detecting that the load parameter at the root of the blade 109 is greater than a preset first load parameter threshold; or, determine, by the server, that there is a risk of damage to the blade 109 of the wind power generator set, when detecting that the load parameter at the middle part of the blade 109 is greater than a preset second load parameter threshold; or, determine, by the server, that there is a risk of damage to the tower 108 of the wind power generator set, when the load parameter at the bottom of the tower 108 is greater than a preset third load parameter threshold.

When it is detected that the load parameter at the root of the blade 109 is greater than the preset first load parameter threshold, it means that when the wind power generator set is in the emergency collection mode, the typhoon has caused damage to the blade 109 of the wind power generator set. In this way, it is determined that there is a risk of damage to the blade 109 of the wind power generator set, and the reliability of such determination is high.

When it is detected that the load parameter at the middle part of the blade 109 is greater than the preset second load parameter threshold, it means that when the wind power generator set is in the emergency collection mode, the typhoon has caused damage to the blade 109 of the wind power generator set. In this way, it is determined that there is a risk of damage to the blade 109 of the wind power generator set, and the reliability of such determination is high. Or, when the load parameter at the bottom of the tower 108 is greater than the preset third load parameter threshold, when the wind power generator set is in the emergency collection mode, the typhoon has caused damage to the tower 108 of the wind power generator set. In this way, it is determined that there is a risk of damage to the tower 108 of the wind power generator set, and the reliability of such determination is high.

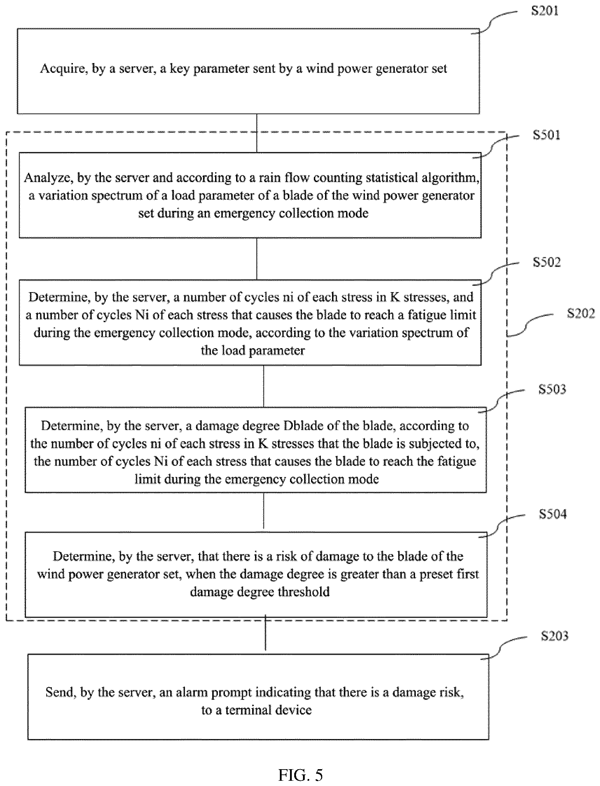

Further, when the target component includes the blade 109 of the wind power generator set, the key parameter includes the load parameter of the blade 109, as shown in FIG. 5, S202 may specifically be implemented as:

S501, analyze, by the server and according to a rain flow counting statistical algorithm, a variation spectrum of the load parameter of the blades 109 of the wind power generator set during the emergency collection mode.

S502, determine, by the server, a number of cycles $n_i$ of each stress in K stresses, and a number of cycles $N_i$ of each stress that causes the blade 109 to reach a fatigue limit during the emergency collection mode, according to the variation spectrum of the load parameter.

For example, when K=5, K stresses include stress 1, stress 2, stress 3, stress 4 and stress 5, where stress 1 is greater than stress 2, greater than stress 3, greater than stress 4 and stress 5, where, the number of cycles of stress 1 is 50, the number of cycles of stress 2 is 50, the number of cycles of stress 3 is 60, the number of cycles of stress 4 is 70, and the number of cycles of stress 5 is 80.

The number of cycles of stress 1 that causes the blade 109 to reach the fatigue limit is 30, the number of cycles of stress 2 that causes the blade 109 to reach the fatigue limit is 50, the number of cycles of stress 3 that causes the blade 109 to reach the fatigue limit is 70, the number of cycles of stress 4 that causes the blade 109 to reach the fatigue limit is 90.

S503, determine, by the server, a damage degree $D_{blade}$ of the blade 109, according to the number of cycles $n_i$ of each stress in K stresses that the blade 109 of the wind power generator set are subjected to, the number of cycles $N_i$ of each stress that causes the blade 109 to reach the fatigue limit during the emergency collection mode, and a formula

$$D_{blade} = \sum_i^K \frac{n_i}{N_i} (i = 1,2..k,)$$
.

S504, determine, by the server, that there is a risk of damage to the blade 109 of the wind power generator set, when the damage degree is greater than a preset first damage degree threshold (e.g., 0.03 or 0.04).

It can be understood that the reliability of the damage degree of the blade 209 determined by the above formula is high, and therefore, the reliability of determining that there is a risk of damage to the blade 109 of the wind power generator set when the damage degree is greater than the preset first damage degree threshold is also high.

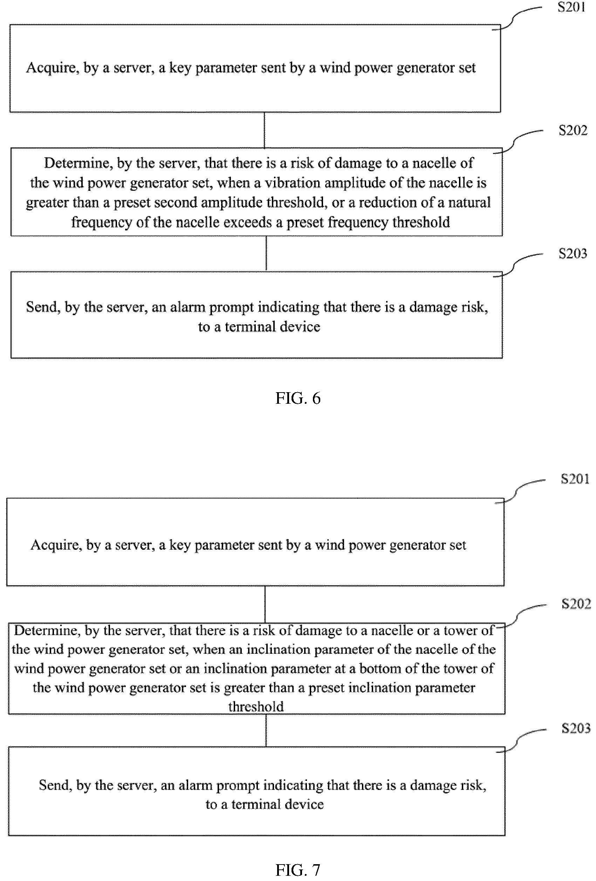

When the target component includes the nacelle 107 of the wind power generator set, and the vibration parameter is a vibration amplitude and a natural frequency of the nacelle 107, FIG. 6 is another damage alarm method for the wind power generator set provided by an embodiment of the present application. As shown in FIG. 6, the above S202 may specifically be implemented as:

determine, by a server, that there is a risk of damage to the nacelle 107 of the wind power generator set, when the vibration amplitude of the nacelle is greater than a preset second amplitude threshold, or a reduction of the natural frequency of the nacelle 107 exceeds a preset frequency threshold.

When the vibration amplitude of the nacelle 107 is greater than the preset second amplitude threshold, or the reduction of the natural frequency of the nacelle 107 exceeds the preset frequency threshold, it means that when the wind power generator set is in the emergency collection mode, the typhoon has caused a damage to the nacelle 107 of the wind power generator set. In this way, it is determined that there is a risk of damage to the nacelle 107 of the wind power generator set, and the reliability of such determination is high.

Exemplarily, the target component may further include the nacelle 107 and/or the tower 108 of the wind power generator set. FIG. 7 is another damage alarm method for the wind power generator set provided by an embodiment of the present application. As shown in FIG. 7, the above S202 may specifically be implemented as: determine, by a server, that there is a risk of damage to the nacelle 107 or the tower 108 of the wind power generator set, when an inclination parameter of the nacelle 107 of the wind power generator set or an inclination parameter at a bottom of the tower 108 of the wind power generator set is greater than a preset inclination parameter threshold (e.g., 0.01 degree).

When the inclination parameter of the nacelle 107 of the wind power generator set or the inclination parameter at the bottom of the tower 108 of the wind power generator set is greater than the preset inclination parameter threshold, it means that when the wind power generator set is in an emergency collection mode, the typhoon has caused a damage to the nacelle 107 of the wind power generator set. In this way, it is determined that there is a risk of damage to the nacelle 107 of the wind power generator set, and the reliability of such determination is high.

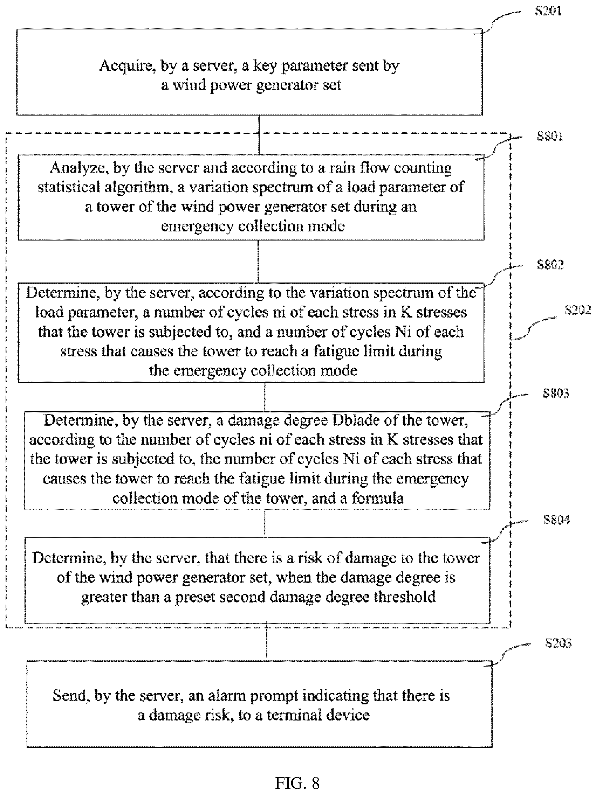

Exemplarily, the target component includes the tower 108 of the wind power generator set, and the key parameter includes a load parameter of the tower. FIG. 8 is another damage alarm method for the wind power generator set provided by an embodiment of the present application. As shown in FIG. 8, the above S202 may specifically be implemented as:

S801, analyze, by the server and according to a rain flow counting statistical algorithm, a variation spectrum of the load parameter of the tower 108 of the wind power generator set during an emergency collection mode.

S802, determine, by the server, according to the variation spectrum of the load parameter, a number of cycles $n_i$ of each stress in K stresses that the tower 108 is subjected to, and a number of cycles $N_i$ of each stress that causes the tower 108 to reach a fatigue limit during the emergency collection mode.

The principle of S802 and S502 are the same and will not be repeated here.

S803, determine, by the server, a damage degree $D_{blade}$ of the tower 108, according to the number of cycles $n_i$ of each stress in K stresses that the tower 108 of the wind power generator set is subjected to, the number of cycles $N_i$ of each stress that causes the tower 108 to reach the fatigue limit when the tower 108 is in the emergency collection mode, and a formula

$$D_{blade} = \sum_i^K \frac{n_i}{N_i} (i = 1,2..k,)$$
.

S804, determine, by the server, that there is a risk of damage to the tower 108 of the wind power generator set, when the damage degree is greater than a preset second damage degree threshold.

It can be understood that the reliability of the damage degree of the blade 109 determined by the above formula is high, and therefore, the reliability of determining that there is a risk of damage to the blade 109 of the wind power generator set when the damage degree is greater than the preset second damage degree threshold is also high.

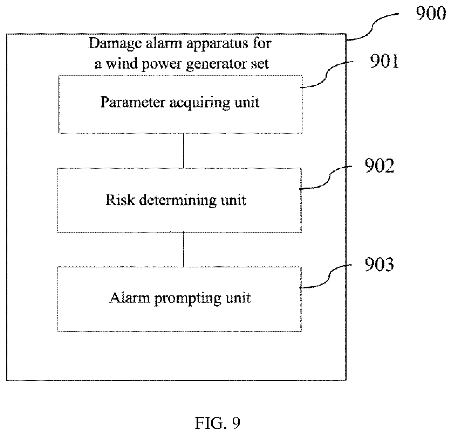

Please refer to FIG. 9. An embodiment of the present application further provides a damage alarm apparatus 900 for a wind power generator set. It should be noted that the basic principle and the generated technical effect of the damage alarm apparatus 900 for the wind power generator set provided by the embodiment of the present application are the same as those of the above embodiments corresponding to FIG. 2. For brief description, for the parts not mentioned in the embodiment of the present application may refer to the corresponding content in the above embodiments. The damage alarm apparatus 900 for the wind power generator set of the present application includes a parameter acquiring unit 901, a risk determining unit 902, and an alarm prompting unit 903.

The parameter acquiring unit 901 is configured to acquire a key parameter sent by the wind power generator set. The key parameter is a key parameter of a target component of the wind power generator set collected by the wind power generator set in an emergency collection mode.

The risk determining unit 902 is configured to determine whether there is a risk of damage to the wind power generator set according to the key parameter of the target component.

The alarm prompting unit 903 is configured to send, to a terminal device, an alarm prompt indicating that there is a damage risk, when it is determined that there is a risk of damage to the wind power generator set. The key parameter includes at least one of the following: a vibration parameter, an inclination parameter and a load parameter.

In a possible implementation, when the target component includes a blade of the wind power generator set, and the vibration parameter is a flapwise vibration amplitude, a edgewise vibration amplitude, a coupling vibration amplitude and a natural frequency of the blade, the risk determining unit 902 is specifically configured to determine that there is a risk of damage to the blade of the wind power generator set, when any one of the flapwise vibration amplitude, the edgewise vibration amplitude, and the coupling vibration amplitude of the blade is greater than a preset first amplitude threshold, or a reduction of the natural frequency of the blade exceeds a preset frequency threshold.

In a possible implementation, when the target component includes the blade and/or the tower 108 of the wind power generator set, and the load parameter is a load parameter at a root of the blade, and/or a load parameter at a middle part of the blade, and/or a load parameter at a bottom of the tower 108, the risk determining unit 902 is specifically configured to determine whether there is a risk of damage to the wind power generator set according to the key parameter of the target component: determine that there is a risk of damage to the blade of the wind power generator set, when it is detected that the load parameter at the root of the blade is greater than a preset first load parameter threshold; or, determine that there is a risk of damage to the blade of the wind power generator set, when it is detected that the load parameter at the middle part of the blade is greater than a preset second load parameter threshold; or, determine that there is a risk of damage to the tower 108 of the wind power generator set, when the load parameter at the bottom of the tower 108 is greater than a preset third load parameter threshold.

In a possible implementation, when the target component includes the blade of the wind power generator set, the key parameter includes a load parameter of the blade. The risk determining unit 902 is specifically configured to analyze, according to a rain flow counting statistical algorithm, a variation spectrum of the load parameter of the blade of the wind power generator set during the emergency collection mode; determine a number of cycles $n_i$ of each stress in K stresses that the blade is subjected to, and a number of cycles $N_i$ of each stress that causes the blade to reach a fatigue limit during the emergency collection mode, according to the variation spectrum of the load parameter; determine a damage degree $D_{blade}$ of the blade, according to the number of cycles $n_i$ of each stress in K stresses that the blade is subjected to, the number of cycles $N_i$ of each stress that causes the blade to reach the fatigue limit during the emergency collection mode, and a formula

$$D_{blade} = \sum_i^K \frac{n_i}{N_i} (i = 1,2..k,)$$

, and determine that there is a risk of damage to the blade of the wind power generator set, when the damage degree is greater than a preset first damage degree threshold.

In a possible implementation, when the target component includes a nacelle of the wind power generator set, and the vibration parameter is a vibration amplitude and a natural frequency of the nacelle, the risk determining unit 902 is specifically configured to determine that there is a risk of damage to the nacelle of the wind power generator set, when the vibration amplitude of the nacelle is greater than a preset second amplitude threshold, or a reduction of the natural frequency of the nacelle exceeds the preset frequency threshold.

In a possible implementation, when the target component includes a nacelle and/or the tower 108 of the wind power generator set, the risk determining unit 902 is specifically configured to determine that there is a risk of damage to the nacelle or the tower 108 of the wind power generator set, when the inclination parameter of the nacelle of the wind power generator set or the inclination parameter at a bottom of the tower of the wind power generator set is greater than a preset inclination parameter threshold.

In a possible implementation, the target component includes the tower 108 of the wind power generator set generator, and the key parameter includes a load parameter of the tower. The risk determining unit 902 is specifically configured to analyze, according to a rain flow counting statistical algorithm, a variation spectrum of the load parameter of the tower 108 of the wind power generator set during the emergency collection mode; determine according to the variation spectrum of the load parameter, a number of cycles $n_i$ of each stress in K stresses that the tower 108 of the wind power generator set is subjected to, and a number of cycles $N_i$ of each stress that causes the blade to reach a fatigue limit during the emergency collection mode; determine a damage degree $D_{blade}$ of the tower 108, according to the number of cycles $n_i$ of each stress in K stresses that the tower 108 is subjected to, the number of cycles $N_i$ of each stress that causes the tower 108 to reach the fatigue limit during the emergency collection mode, and a formula

$$D_{blade} = \sum_i^K \frac{n_i}{N_i} (i = 1,2..k,)$$

; and determine that there is a risk of damage to the tower 108 of the wind power generator set, when the damage degree is greater than a preset second damage degree threshold.

In a possible implementation, the premise for the wind power generator set in the emergency collection mode includes:

a main controller of the wind power generator set enters a typhoon mode;
or, the main controller of the wind power generator set determines that a network disconnection occurs;
or, the main controller of the wind power generator set determines that a power outage occurs;
or, the main controller of the wind power generator set determines that a wind speed is greater than a preset threshold.

An embodiment of the present application further provides a server, including a memory, a processor, and computer programs stored in the memory and runnable on the processor, when the processor executes the computer programs, the server is caused to execute the method provided by the embodiments of the present application.

An embodiment of the present application further provides a computer readable storage medium having computer programs stored thereon, when the computer programs are executed by a processor, a computer is caused to execute the method provided by the embodiments of the present application.

Finally, it should be noted that: the above embodiments are only used to illustrate the technical solutions of the present application, but not to limit it; although the present application has been illustrated in detail with reference to the foregoing embodiments, those of ordinary skill in the art should understand that: the technical solutions recorded in the foregoing embodiments may still be modified, or some or all of the technical features may be equivalently substituted; and these modifications or substitutions do not make the essence of the corresponding technical solutions deviate from the scope of the technical solutions of the embodiments of the present application.

**Claims**

1. A damage alarm method for a wind power generator set, wherein the method comprises:

acquiring, by a server, a key parameter sent by the wind power generator set; wherein the key parameter is a key parameter of a target component of the wind power generator set collected by the wind power generator set in an emergency collection mode;
determining, by the server, whether there is a risk of damage to the wind power generator set according to the key parameter of the target component;
sending, by the server, an alarm prompt indicating that there is a damage risk, to a terminal device, when determining that there is a risk of damage to the wind power generator set;
wherein the key parameter comprises at least one of the following: a vibration parameter, an inclination parameter and a load parameter.

2. The method according to claim 1, wherein when the target component comprises a blade of the wind power generator set, and the vibration parameter is a flapwise vibration amplitude, an edgewise vibration amplitude, a coupling vibration amplitude and a natural frequency of the blade, the determining, by the server, whether there is a risk of damage to the wind power generator set according to the key parameter of the target component comprises:
determining, by the server, that there is a risk of damage to the blade of the wind power generator set, when any one of the flapwise vibration amplitude, the edgewise vibration amplitude, and the coupling vibration amplitude of the blade is greater than a preset first amplitude threshold, or a reduction of the natural frequency of the blade exceeds a preset frequency threshold.

3. The method according to claim 1, wherein when the target component comprises a blade and/or a tower of the wind power generator set, and the load parameter is a load parameter at a root of the blade, and/or a load parameter at a middle part of the blade, and/or a load parameter at a bottom of the tower, the determining, by the server, whether there is a risk of damage to the wind power generator set according to the key parameter of the target component comprises:

determining, by the server, that there is a risk of damage to the blade of the wind power generator set, when detecting that the load parameter at the root of the blade is greater than a preset first load parameter threshold;
and/or, determining, by the server, that there is a risk of damage to the blade of the wind power generator set, when detecting that the load parameter at the middle part of the blade is greater than a preset second load parameter threshold;
and/or, determining, by the server, that there is a risk of damage to the tower of the wind power generator set, when the load parameter at the bottom of the tower is greater than a preset third load parameter threshold.

4. The method according to claim 1, wherein when the target component comprises a blade of the wind power generator set, the key parameter comprises a load parameter of the blade, and the determining, by the server, whether there is a risk of damage to the wind power generator set according to the key parameter of the target component comprises:

analyzing, by the server and according to a rain flow counting statistical algorithm, a variation spectrum of the load parameter of the blade of the wind power generator set during the emergency collection mode;
determining, by the server, a number of cycles $n_i$ of each stress in K stresses that the blade of the wind power generator set is subjected to, and a number of cycles $N_i$ of each stress that causes the blade to reach a fatigue limit during the emergency collection mode, according to the variation spectrum of the load parameter;
determining, by the server, a damage degree $D_{blade}$ of the blade, according to the number of cycles $n_i$ of each stress in K stresses that the blade is subjected to, the number of cycles $N_i$ of each stress that causes the blade to reach the fatigue limit during the emergency collection mode, and a formula:

$$D_{blade} = \sum_{i}^{K} \frac{n_i}{N_i} (i = 1, 2..k,)$$,

determining, by the server, that there is a risk of damage to the blade of the wind power generator set, when the damage degree is greater than a preset first damage degree threshold.

5. The method according to claim 1 or 2, wherein when the target component further comprises a nacelle of the wind power generator set, and the vibration parameter is a vibration amplitude and a natural frequency of the nacelle, the determining, by the server, whether there is a risk of damage to the wind power generator set according to the key parameter of the target component comprises:
determining, by the server, that there is a risk of damage to the nacelle of the wind power generator set, when the vibration amplitude of the nacelle is greater than a preset second amplitude threshold, or a reduction of the natural frequency of the nacelle exceeds a preset frequency threshold.

6. The method according to claim 1, wherein when the target component comprises a nacelle and/or a tower of the wind power generator set, the determining, by the server, whether there is a risk of damage to the wind power generator set according to the key parameter of the target component comprises:
determining, by the server, that there is a risk of damage to the nacelle or the tower of the wind power generator set, when an inclination parameter of the nacelle of the wind power generator set or an inclination parameter at a bottom of the tower of the wind power generator set is greater than a preset inclination parameter threshold.

7. The method according to claim 1, wherein the target component comprises a tower of the wind power generator set, the key parameter comprises a load parameter of the tower, and the determining, by the server, whether there is a risk of damage to the wind power generator set according to the key parameter of the target component comprises:

analyzing, by the server and according to a rain flow counting statistical algorithm, a variation spectrum of the load parameter of the tower of the wind power generator set during the emergency collection mode;
determining, by the server, a number of cycles $n_i$ of each stress in K stresses that the tower of the wind power generator set is subjected to, and a number of cycles $N_i$ of each stress that causes the tower to reach a fatigue limit during the emergency collection mode, according to the variation spectrum of the load parameter;
determining a damage degree $D_{blade}$ of the tower, according to the number of cycles $n_i$ of each stress in K stresses that the tower is subjected to, the number of cycles $N_i$ of each stress that causes the tower to reach the fatigue limit during the emergency collection mode, and a formula:

$$D_{blade} = \sum_{i}^{K} \frac{n_i}{N_i} (i = 1, 2..k,)$$

,

determining, by the server, that there is a risk of damage to the tower of the wind power generator set, when the damage degree is greater than a preset second damage degree threshold.

8. The method according to claim 1, wherein a premise for the wind power generator set in the emergency collection mode comprises:

a main controller of the wind power generator set enters a typhoon mode;
or, the main controller of the wind power generator set determines that a network disconnection occurs;
or, the main controller of the wind power generator set determines that a power outage occurs;
or, the main controller of the wind power generator set determines that a wind speed is greater than a preset threshold.

9. A damage alarm apparatus for a wind power generator set, wherein the apparatus comprises:

a parameter acquiring unit, configured to acquire a key parameter sent by the wind power generator set; wherein the key parameter is a key parameter of a target component of the wind power generator set collected by the wind power generator set in an emergency collection mode;
a risk determining unit, configured to determine whether there is a risk of damage to the wind power generator set according to the key parameter of the target component;
an alarm prompting unit, configured to send, to a terminal device, an alarm prompt indicating that there is a damage risk, when it is determined that there is a risk of damage to the wind power generator set;
wherein the key parameter comprises at least one of the following: a vibration parameter, an inclination parameter and a load parameter.

10. A server, comprising a memory, a processor, and computer programs stored in the memory and runnable on the processor, wherein when the processor executes the computer programs, the server is caused to execute the method according to any one of claims 1 to 8.

11. A computer readable storage medium having computer programs stored on, wherein when the computer programs are executed by a processor, a computer is caused to execute the method according to any one of claims 1 to 8.

FIG. 1

FIG. 2

S201

Acquire, by a server, a key parameter sent by a wind power generator set

S202

Determine, by the server, that there is a risk of damage to a blade of the wind power generator set, when any one of a flapwise vibration amplitude, a edgewise vibration amplitude, and a coupling vibration amplitude of the blade is greater than a preset first amplitude threshold, or a reduction of a natural frequency of the blade exceeds a preset frequency threshold

S203

Send, by the server, an alarm prompt indicating that there is a damage risk, to a terminal device

FIG. 3

S201

Acquire, by a server, a key parameter sent by a wind power generator set

S202

Determine, by the server, that there is a risk of damage to a blade of the wind power generator set, when detecting that a load parameter at a root of the blade is greater than a preset first load parameter threshold; or, determine, by the server, that there is a risk of damage to the blade of the wind power generator set, when detecting that a load parameter at a middle part of the blade is greater than a preset second load parameter threshold; or, determine, by the server, that there is a risk of damage to a tower of the wind power generator set, when a load parameter at a bottom of the tower is greater than a preset third load parameter threshold

S203

Send, by the server, an alarm prompt indicating that there is a damage risk, to a terminal device

FIG. 4

S201

Acquire, by a server, a key parameter sent by a wind power generator set

S501

Analyze, by the server and according to a rain flow counting statistical algorithm, a variation spectrum of a load parameter of a blade of the wind power generator set during an emergency collection mode

S502

Determine, by the server, a number of cycles ni of each stress in K stresses, and a number of cycles Ni of each stress that causes the blade to reach a fatigue limit during the emergency collection mode, according to the variation spectrum of the load parameter

S202

S503

Determine, by the server, a damage degree Dblade of the blade, according to the number of cycles ni of each stress in K stresses that the blade is subjected to, the number of cycles Ni of each stress that causes the blade to reach the fatigue limit during the emergency collection mode

S504

Determine, by the server, that there is a risk of damage to the blade of the wind power generator set, when the damage degree is greater than a preset first damage degree threshold

S203

Send, by the server, an alarm prompt indicating that there is a damage risk, to a terminal device

FIG. 5

S201

Acquire, by a server, a key parameter sent by a wind power generator set

S202

Determine, by the server, that there is a risk of damage to a nacelle of the wind power generator set, when a vibration amplitude of the nacelle is greater than a preset second amplitude threshold, or a reduction of a natural frequency of the nacelle exceeds a preset frequency threshold

S203

Send, by the server, an alarm prompt indicating that there is a damage risk, to a terminal device

FIG. 6

S201

Acquire, by a server, a key parameter sent by a wind power generator set

S202

Determine, by the server, that there is a risk of damage to a nacelle or a tower of the wind power generator set, when an inclination parameter of the nacelle of the wind power generator set or an inclination parameter at a bottom of the tower of the wind power generator set is greater than a preset inclination parameter threshold

S203

Send, by the server, an alarm prompt indicating that there is a damage risk, to a terminal device

FIG. 7

Acquire, by a server, a key parameter sent by
a wind power generator set

S201

Analyze, by the server and according to a rain flow counting
statistical algorithm, a variation spectrum of a load parameter of
a tower of the wind power generator set during an
emergency collection mode

S801

Determine, by the server, according to the variation spectrum of the
load parameter, a number of cycles ni of each stress in K stresses
that the tower is subjected to, and a number of cycles Ni of each
stress that causes the tower to reach a fatigue limit during
the emergency collection mode

S802

S202

Determine, by the server, a damage degree Dblade of the tower,
according to the number of cycles ni of each stress in K stresses that
the tower is subjected to, the number of cycles Ni of each stress that
causes the tower to reach the fatigue limit during the emergency
collection mode of the tower, and a formula

S803

Determine, by the server, that there is a risk of damage to the tower
of the wind power generator set, when the damage degree is
greater than a preset second damage degree threshold

S804

Send, by the server, an alarm prompt indicating that there is
a damage risk, to a terminal device

S203

FIG. 8

900

Damage alarm apparatus for
a wind power generator set

901

Parameter acquiring unit

902

Risk determining unit

903

Alarm prompting unit

FIG. 9

## INTERNATIONAL SEARCH REPORT

| International application No. |
| --- |
| **PCT/CN2023/131025** |

**A. CLASSIFICATION OF SUBJECT MATTER**

F03D17/00(2016.01)i

According to International Patent Classification (IPC) or to both national classification and IPC

**B. FIELDS SEARCHED**

Minimum documentation searched (classification system followed by classification symbols)

IPC:F03D

Documentation searched other than minimum documentation to the extent that such documents are included in the fields searched

Electronic data base consulted during the international search (name of data base and, where practicable, search terms used)

CNTXT, ENTXTC, WPABSC, CNKI: 风力, 风电, 风轮, 叶片, 机舱, 塔, 振动, 震动, 载荷, 倾角, 警, 阈值, 对比, 雨流, 台风. ENTXT, VEN, WPABS, DWPI: wind power, wind turbine, blade, vane, cabin, nacelle, tower, vibration, oscillation, load, inclination, alarm, threshold, compare, rain flow, typhoon.

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116641851 A (CHINA THREE GORGES RENEWABLES (GROUP) CO., LTD.) 25 August 2023 (2023-08-25)<br>description, paragraphs 4-42, and figures 1-9 | 1-11 |
| X | CN 213981063 U (LI QINGHANG) 17 August 2021 (2021-08-17)<br>description, paragraphs 29-53, and figures 1-2 | 1-3, 5-6, 8-11 |
| Y | CN 213981063 U (LI QINGHANG) 17 August 2021 (2021-08-17)<br>description, paragraphs 29-53, and figures 1-2 | 4,7 |
| Y | CN 111488678 A (ZHEJIANG WINDEY CO., LTD.) 04 August 2020 (2020-08-04)<br>description, paragraphs 53-54 | 4,7 |
| X | CN 107829884 A (XI'AN RUIYIDA WIND POWER TECHNOLOGY CO., LTD.) 23 March 2018 (2018-03-23)<br>description, paragraphs 4-28, and figures 1-3 | 1-3, 5-6, 8-11 |
| Y | CN 107829884 A (XI'AN RUIYIDA WIND POWER TECHNOLOGY CO., LTD.) 23 March 2018 (2018-03-23)<br>description, paragraphs 4-28, and figures 1-3 | 4,7 |

☑ Further documents are listed in the continuation of Box C.    ☑ See patent family annex.

| | |
| --- | --- |
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **31 January 2024** | **05 February 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2023/131025** |

**C.    DOCUMENTS CONSIDERED TO BE RELEVANT**

| Category* | Citation of document, with indication, where appropriate, of the relevant passages | Relevant to claim No. |
|---|---|---|
| Y | CN 113357099 A (ZHEJIANG UNIVERSITY) 07 September 2021 (2021-09-07) description, paragraphs 67-80 | 4, 7 |
| A | WO 2016138647 A1 (GENERAL ELECTRIC COMPANY et al.) 09 September 2016 (2016-09-09) entire document | 1-11 |
| A | CN 111472943 A (XI'AN THERMAL POWER RESEARCH INSTITUTE CO., LTD.) 31 July 2020 (2020-07-31) entire document | 1-11 |

Form PCT/ISA/210 (second sheet) (July 2022)

**EP 4 488 513 A1**

## INTERNATIONAL SEARCH REPORT
### Information on patent family members

International application No.

**PCT/CN2023/131025**

| Patent document cited in search report | | | Publication date (day/month/year) | Patent family member(s) | | | Publication date (day/month/year) |
|---|---|---|---|---|---|---|---|
| CN | 116641851 | A | 25 August 2023 | None | | | |
| CN | 213981063 | U | 17 August 2021 | None | | | |
| CN | 111488678 | A | 04 August 2020 | CN | 211979670 | U | 20 November 2020 |
| | | | | CN | 111488678 | B | 07 July 2023 |
| CN | 107829884 | A | 23 March 2018 | CN | 107829884 | B | 29 November 2019 |
| CN | 113357099 | A | 07 September 2021 | CN | 113357099 | B | 06 September 2022 |
| WO | 2016138647 | A1 | 09 September 2016 | None | | | |
| CN | 111472943 | A | 31 July 2020 | WO | 2021232675 | A1 | 25 November 2021 |
| | | | | CN | 212615177 | U | 26 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310558910